(19) Europäisches Patentamt
European Patent Office
Office européen des brevets

(11) **EP 4 668 912 A1**

(12) **EUROPEAN PATENT APPLICATION**
published in accordance with Art. 153(4) EPC

(43) Date of publication:
**24.12.2025 Bulletin 2025/52**

(51) International Patent Classification (IPC):
**H04W 64/00** (2009.01)

(21) Application number: **23921694.8**

(52) Cooperative Patent Classification (CPC):
**H04W 64/00**

(22) Date of filing: **14.02.2023**

(86) International application number:
**PCT/CN2023/075955**

(87) International publication number:
**WO 2024/168525 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• LIU, Yang
  Dongguan, Guangdong 523860 (CN)
• YU, Xinlei
  Dongguan, Guangdong 523860 (CN)
• SHI, Cong
  Dongguan, Guangdong 523860 (CN)

(74) Representative: **RGTH
Patentanwälte PartGmbB
Neuer Wall 10
20354 Hamburg (DE)**

(54) **COMMUNICATION METHOD AND COMMUNICATION APPARATUS**

(57) Provided are a communication method and a communication apparatus. The method comprises: a first device receiving first information, wherein the first information comprises position information of a first intelligent reflection plane and signal processing delay information; and the first device determining a positioning result of a terminal device according to the first information. The method in the embodiments of the present application is conducive to improving the positioning precision of a terminal device.

Method 500

FIG. 5

EP 4 668 912 A1

## Description

### TECHNICAL FIELD

This application relates to the field of communications technologies, and more specifically, to a communication method and a communications apparatus.

### BACKGROUND

With development of communications technologies, some communications systems support location service (location service, LCS), and may perform positioning on a terminal device. However, currently, positioning precision is not high. Therefore, how to improve positioning precision of a terminal device has become an urgent technical problem to be resolved.

### SUMMARY

Embodiments of this application provide a communication method and a communications apparatus. The following describes various aspects involved in embodiments of this application.

According to a first aspect, there is provided a communication method. The communication method includes: receiving, by a first device, first information, where the first information includes location information and signal processing delay information of a first intelligent reflecting surface; and determining, by the first device, a positioning result of a terminal device based on the first information.

According to a second aspect, there is provided a communication method. The communication method includes: transmitting, by a second device, first information, where the first information includes location information and signal processing delay information of a first intelligent reflecting surface.

According to a third aspect, there is provided a communication method. The communication method includes: transmitting, by a third device, third information, where the third information is used to indicate that a signal transmitted between a first access network device and a terminal device is processed by using an intelligent reflecting surface.

According to a fourth aspect, there is provided a communications apparatus. The communications apparatus includes: a receiving unit, configured to receive first information, where the first information includes location information and signal processing delay information of a first intelligent reflecting surface; and a determining unit, configured to determine a positioning result of a terminal device based on the first information.

According to a fifth aspect, there is provided a communications apparatus. The communications apparatus includes: a transmitting unit, configured to transmit first information, where the first information includes location information and signal processing delay information of a first intelligent reflecting surface.

According to a sixth aspect, there is provided a communications apparatus. The communications apparatus includes: a transmitting unit, configured to transmit third information, where the third information is used to indicate that a signal transmitted between a first access network device and a terminal device is processed by using an intelligent reflecting surface.

According to a seventh aspect, there is provided a communications apparatus. The communications apparatus includes a memory, a transceiver, and a processor, where the memory is configured to store a program, the processor performs data transmission and reception by using the transceiver, and the processor is configured to invoke the program in the memory to cause the communications apparatus to execute the method according to the first aspect.

According to an eighth aspect, there is provided a communications apparatus. The communications apparatus includes a memory, a transceiver, and a processor, where the memory is configured to store a program, the processor performs data transmission and reception by using the transceiver, and the processor is configured to invoke the program in the memory to cause the communications apparatus to execute the method according to the second aspect.

According to a ninth aspect, there is provided a communications apparatus. The communications apparatus includes a memory, a transceiver, and a processor, where the memory is configured to store a program, the processor performs data transmission and reception by using the transceiver, and the processor is configured to invoke the program in the memory to cause the communications apparatus to execute the method according to the third aspect.

According to a tenth aspect, there is provided a chip. The chip includes a processor, configured to invoke a program from a memory to cause a device on which the chip is installed to execute the method according to the first aspect.

According to an eleventh aspect, there is provided a chip. The chip includes a processor, configured to invoke a program from a memory to cause a device on which the chip is installed to execute the method according to the second aspect.

According to a twelfth aspect, there is provided a chip. The chip includes a processor, configured to invoke a program from a memory to cause a device on which the chip is installed to execute the method according to the third aspect.

According to a thirteenth aspect, there is provided a computer-readable storage medium, where a program is stored on the computer-readable storage medium, and the program causes a computer to execute the method according to the first aspect.

According to a fourteenth aspect, there is provided a computer-readable storage medium, where a program is stored on the computer-readable storage medium, and the program causes a computer to execute the method according to the second aspect.

According to a fifteenth aspect, there is provided a computer-readable storage medium, where a program is stored on the computer-readable storage medium, and the program causes a computer to execute the method according to the third aspect.

According to a sixteenth aspect, there is provided a computer program product. The computer program product includes a program, where the program causes a computer to execute the method according to the first aspect.

According to a seventeenth aspect, there is provided a computer program product. The computer program product includes a program, where the program causes a computer to execute the method according to the second aspect.

According to an eighteenth aspect, there is provided a computer program product. The computer program product includes a program, where the program causes a computer to ececute the method according to the third aspect.

According to a nineteenth aspect, a computer program is provided, where the computer program causes a computer to execute the method according to the first aspect.

According to a twentieth aspect, a computer program is provided, where the computer program causes a computer to execute the method according to the second aspect.

According to a twenty-first aspect, a computer program is provided, where the computer program causes a computer to execute the method according to the third aspect.

In embodiments of this application, the first information includes the location information and the signal processing delay information of the first intelligent reflecting surface, and the first device receives the first information, and determines the positioning result of the terminal device based on the first information, thereby facilitating improving positioning precision of the terminal device.

**BRIEF DESCRIPTION OF DRAWINGS**

FIG. 1 is an example diagram of a wireless communications system to which embodiments of this application are applied.
FIG. 2 is an example diagram of TDOA positioning.
FIG. 3 is an example diagram of RTT positioning.
FIG. 4 is an example diagram of reflection of a signal by an IRS.
FIG. 5 is a schematic flowchart of a communication method according to an embodiment of this application.
FIG. 6 is an example diagram of positioning using an IRS according to an embodiment of this application.
FIG. 7 is a schematic structural diagram of a communications apparatus according to an embodiment of this application.
FIG. 8 is a schematic structural diagram of a communications apparatus according to another embodiment of this application.
FIG. 9 is a schematic structural diagram of a communications apparatus according to still another embodiment of this application.
FIG. 10 is a schematic structural diagram of an apparatus according to an embodiment of this application.

**DESCRIPTION OF EMBODIMENTS**

Technical solutions in this application are described below with reference to the accompanying drawings.

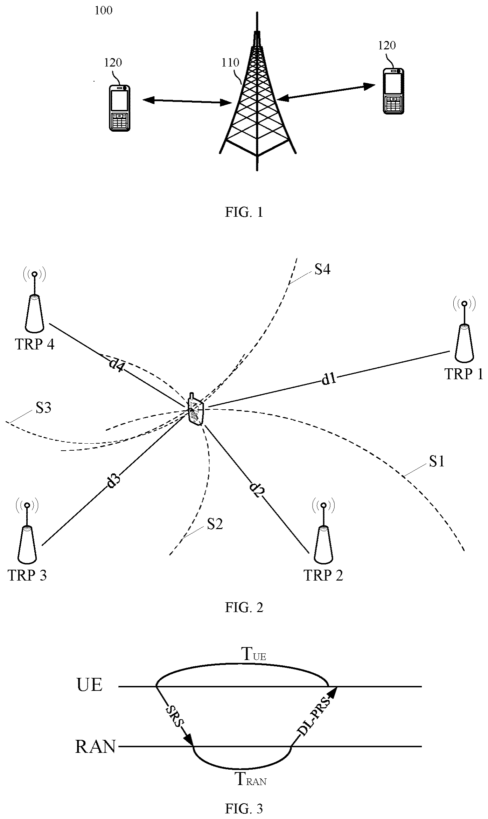

FIG. 1 shows a wireless communications system 100 to which embodiments of this application are applied. The wireless communications system 100 may include a network device 110 and a user equipment (user equipment, UE) 120. The network device 110 may communicate with the UE 120. The network device 110 may provide communication coverage for a specific geographic area, and may communicate with the UE 120 within the coverage. The UE 120 may access a network (for example, a wireless network) by using the network device 110.

FIG. 1 exemplarily shows one network device and two UEs. Optionally, the wireless communications system 100 may include a plurality of network devices, and another quantity of terminal devices may be included in coverage of each network device, which is not limited in embodiments of this application. Optionally, the wireless communications system 100 may further include another network entity such as a network controller or a mobility management entity, which is not limited in embodiments of this application.

It should be understood that the technical solutions of embodiments of this application may be applied to various communications systems, such as a 5th generation (5th generation, 5G) system or new radio (new radio, NR), a long-term evolution (long term evolution, LTE) system, an LTE frequency division duplex (frequency division duplex, FDD) system, and an LTE time division duplex (time division duplex, TDD) system. The technical solutions provided in this application may be further applied to a future communications system, such as a 6th generation mobile communications system or a satellite communications system.

The UE in embodiments of this application may also be referred to as a terminal device, an access terminal, a subscriber unit, a subscriber station, a mobile site, a mobile station (mobile station, MS), a mobile terminal (mobile Terminal, MT), a remote station, a remote terminal, a mobile device, a user terminal, a terminal, a wireless communications device, a user agent, or a user apparatus. The UE in embodiments of this application may be a device providing a user with voice and/or data connectivity and capable of connecting people, objects, and machines, such as a handheld device or vehicle-mounted device having a wireless connection function. The UE in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be configured to function as a base station. For example, the UE may function as a scheduling entity, which provides a sidelink signal between UEs in V2X, D2D, or the like. For example, a cellular phone and a vehicle communicate with each other by using a sidelink signal. A cellular phone and a smart home device communicate with each other, without relaying a communication signal through a base station.

The network device in embodiments of this application may be a device for communicating with the UE. The network device may also be referred to as an access network device or a radio access network device. For example, the network device may be a base station. The network device in embodiments of this application may be a radio access network (radio access network, RAN) node (or device) that connects the UE to a wireless network. The base station may broadly cover devices having the following various names, or may be interchanged with the devices having following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNode MeNB, a secondary eNode SeNB, a multi-standard radio (MSR) node, a home base station, a network controller, an access node, a radio node, an access point (access point, AP), a transmission node, a transceiver node, a baseband unit (base band unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof.

In some embodiments, the network device may be stationary or mobile. For example, a helicopter or an unmanned aerial vehicle may be configured to function as a mobile network device, and one or more cells may move depending on a location of the mobile network device. In other examples, a helicopter or an unmanned aerial vehicle may be configured to function as a device that communicates with another network device. In some embodiments, the network device may be a CU or a DU, or the network device may include a CU and a DU, or the network device may further include an AAU.

It should be understood that the network device may be deployed on land, including being indoors or outdoors, handheld, or vehicle-mounted, may be deployed on a water surface, or may be deployed on a plane, a balloon, or a satellite in the air. In embodiments of this application, the network device and a scenario in which the network device is located in embodiments of this application are not limited.

It should also be understood that all or some of functions of the network device and the UE in this application may also be implemented by software functions running on hardware, or by virtualization functions instantiated on a platform (for example, a cloud platform).

With development of communications technologies, some communications systems support location service (location service, LCS), and may perform positioning on a terminal device. The following describes several common positioning methods.

Time difference of arrival (time difference of arrival, TDOA) positioning is a method for positioning by using a time difference. The TDOA positioning includes uplink positioning and downlink positioning. In application of uplink positioning, a terminal device transmits an uplink sounding reference signal (sounding reference signal, SRS), and base stations are required to measure the SRS transmitted by the terminal device, to determine differences in signal paths between the terminal device and the different base stations. More than two uncorrelated path difference results form the intersection points of hyperbolas, and an intersection of the hyperbolas is the positioning result (a location of the terminal device). In application of downlink positioning, base stations transmit downlink positioning reference signals (downlink positioning reference signal, DL-PRS), and a terminal device is required to measure the reference signals transmitted by the base stations, to determine differences in signal paths between the terminal device and the different base stations. More than two uncorrelated path difference results form hyperbolas, and an intersection of the hyperbolas is the positioning result. In TDOA positioning, base stations involved in the positioning are required to be synchronized in time. If two base stations are not synchronized in time, a calculation result of a difference in signal paths between a terminal device and the two base stations may include a value that is proportional to a degree of time asynchrony between the two base stations, thus causing a positioning result offset.

For example, as shown in FIG. 2, a distance between a UE and a TRP 4 is denoted as d4, a distance between the UE and a TRP 3 is denoted as d3, a distance between the UE and a TRP 2 is denoted as d2, and a distance between the UE and a TRP 1 is denoted as d1, where d4 and d1 correspond to a hyperbola S4 (the points on hyperbola S4 have an equal difference in distance to d4 and d1), d4 and d3 correspond to a hyperbola S3 (the points on hyperbola S3 have an equal difference in distance to d4 and d3), d3 and d2 correspond to a hyperbola S2 (the points on hyperbola S2 have an equal difference in distance to d3 and d2), and d2 and d1 correspond to a hyperbola S1 (the points on hyperbola S1 have an equal difference in distance to d2 and d1). It may be seen from FIG. 2 that, an intersection of the hyperbolas is a location of the terminal device, where d1, d2, d3, and d4 are positive numbers. Generally, at least two hyperbolas, that is, three TRPs, are required to locate the terminal device.

Round trip time (round trip time, RTT) positioning is a method for positioning by using round trip time of a signal. In RTT positioning, distance estimation is performed by using reference signals transmitted between a terminal device and a base station, and the terminal device is then located based on distances between the terminal device and at least three base stations.

For example, as shown in FIG. 3, a UE transmits an SRS to an RAN, and receives a DL-PRS transmitted by the RAN. In addition, the UE records duration from an instant at which the SRS is transmitted by the UE to an instant at which the DL-PRS is received by the UE, and the RAN records duration from an instant at which the SRS is received by the RAN to an instant at which the DL-PRS is transmitted by the RAN. Therefore, signal propagation duration T between the UE and the RAN is as follows:

$$T = (T_{UE} - T_{RAN})/2$$

$T_{UE}$ denotes the duration from the instant at which the SRS is transmitted by the UE to the instant at which the DL-PRS is received by the UE, and $T_{RAN}$ denotes the duration from the instant at which the SRS is received by the RAN to the instant at which the DL-PRS is transmitted by the RAN.

Further, a distance between the UE and the RAN may be calculated based on the signal propagation duration T between the UE and the RAN. After the distances between the terminal device and the at least three base stations are calculated, the location of the terminal device may be estimated.

In an actual positioning scenario (for example, in a city), a communication link between a terminal device and a base station is always non-line-of-sight (non line of sight, NLOS), that is, signals may be blocked (block) on the communication link. The applicant has found through research that signals may be significantly attenuated due to blockage, which affects precision of distance measurement and angle measurement on which positioning depends, consequently reducing positioning precision of the terminal device.

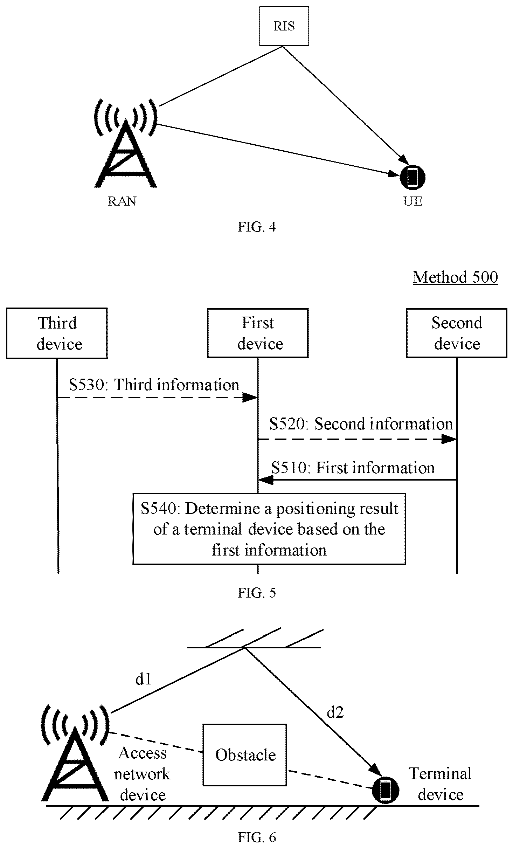

An intelligent reflecting surface (intelligent reflecting surface, IRS) is a new revolutionary technology that may intelligently re-configure a wireless propagation environment by integrating a large quantity of low-cost passive reflection elements on the surface, thereby significantly improving performance of a wireless communication network. Specifically, each of different elements of the IRS may independently reflect an incident signal by controlling its amplitude and/or phase, thereby collaboratively enabling precise three-dimensional (3D) passive beamforming for directional signal enhancement or null forming. Compared to an existing transmitter/receiver radio link adaptation technology, the IRS actively modifies a wireless channel between them through highly controllable and intelligent signal reflection. As shown in FIG. 4, the RAN may perform signal transmission with the UE by using the intelligent reflecting surface, and the intelligent reflecting surface may adjust a reflection element integrated thereon, so that a communication link between the intelligent reflecting surface and the terminal device is line-of-sight (line of sight, LOS). This provides a new degree of freedom for further improving performance of the radio link and paves the way for implementation of an intelligent programmable wireless environment. By appropriately adjusting the 3D passive beamforming, a signal reflected by the IRS may be constructively added to a signal from another path to enhance desired signal power at the receiver, or destructively added to the signal to eliminate undesired signals that may cause co-channel interference. Since the IRS eliminates the use of a transmit radio frequency (radio frequency, RF) chain and operates only over short distances, it may be densely deployed with scalable cost and low power consumption, without complex interference management among passive IRSs.

After analysis, the applicant obtains the following solution: If the intelligent reflecting surface is introduced, a transmission path of a signal may be changed by adjusting the intelligent reflecting surface, so that a communication link between the intelligent reflecting surface and a terminal device is line-of-sight (line of sight, LOS) (that is, no obstruction). In this way, precision of distance measurement and angle measurement on which positioning depends may be improved, and therefore positioning precision of the terminal device may be improved. However, it is currently unclear how to perform positioning by using the intelligent reflecting surface.

To resolve one or more of the foregoing technical problems, this application provides a communication method and a communications apparatus, so that positioning may be performed by using the intelligent reflecting surface, thereby facilitating improving positioning precision of a terminal device.

The following describes in detail the embodiments of this application with reference to FIG. 5.

FIG. 5 is a schematic flowchart of a communication method according to an embodiment of this application. The method 500 shown in FIG. 5 may include steps S510 and S540, which are specifically as follows.

In S510, a second device transmits first information to a first device.

The first device may be a location management function (location management function, LMF) or a terminal device.

The second device may be a first intelligent reflecting surface or a first access network device. The first access network device may perform signal transmission with the terminal device by using the first intelligent reflecting surface. Optionally, a communication link between the terminal device and the first intelligent reflecting surface may be line-of-sight. In this way, signals on the communication link between the terminal device and the first intelligent reflecting surface are not blocked, and accurate distance measurement and angle measurement information required for positioning may be obtained, thereby improving positioning precision of the terminal device.

Optionally, the first access network device may learn location information of the first intelligent reflecting surface. For example, the first intelligent reflecting surface may transmit the location information to the first access network device, or the location information of the first intelligent reflecting surface may be pre-configured in the first access network device.

The first information may include location information and signal processing delay information of the first intelligent reflecting surface. Optionally, the location information and the signal processing delay information may be transmitted simultaneously, or may not be transmitted simultaneously (in this case, it may be considered that the first information includes a plurality of pieces of information). For example, the first device may receive the location information transmitted by the first intelligent reflecting surface (or the first access network device), and may further receive the signal processing delay information transmitted by the first access network device (or the first intelligent reflecting surface).

Optionally, the signal processing delay information may include duration from an instant at which a signal is received by the first intelligent reflecting surface to an instant at which the signal is reflected (or referred to as transmitted) by the first intelligent reflecting surface. For example, if the instant at which the signal is received by the first intelligent reflecting surface is denoted as T1, and the instant at which the signal is reflected (or referred to as transmitted) by the first intelligent reflecting surface is denoted as T2, the signal processing delay information may include T2-T1, where T2 and T1 are positive numbers.

The signal processing delay information may include a real-time delay or a non-real-time delay in signal processing performed by the first intelligent reflecting surface. The real-time delay may indicate that the delay in signal processing performed by the first intelligent reflecting surface changes, and the first intelligent reflecting surface may determine the delay (in signal processing) in real time or periodically. The non-real-time delay may indicate that the delay in signal processing performed by the first intelligent reflecting surface does not change, and the delay (in signal processing) may be pre-configured in the first intelligent reflecting surface. Optionally, the first intelligent reflecting surface may transmit the signal processing delay information to the first access network device.

The first information is carried in new radio NR positioning protocol A (NRPPa) signalling. Optionally, the NRPPa signalling may include NRPPa ProvideAssistanceData signalling. For example, the second device may transmit the first information to the first device by using the NRPPa ProvideAssistanceData signalling.

In some embodiments, the second device may transmit the first information when receiving a trigger request. For example, before S510, the method 500 may include S520. Details are as follows.

In S520, the first device transmits second information to the second device. Optionally, the second information may be used to request the first information.

Correspondingly, when receiving the second information, the second device may transmit the first information to the first device.

In some embodiments, the second device may directly transmit the first information to the first device without receiving a trigger request.

In some embodiments, the second device may indicate to the first device that "a signal is processed by the intelligent reflecting surface". For example, the method 500 may include S530. Details are as follows.

In S530, the second device transmits third information to the first device. Optionally, the third information may be used to indicate that a signal transmitted between the first access network device and the terminal device is processed (or reflected) by using the intelligent reflecting surface.

For example, for a DL-PRS-based positioning method, or for a UL-PRS-based positioning method, the second device may transmit the third information to the first device. For another example, for TDOA positioning or RTT positioning, the second device may transmit the third information to the first device.

Optionally, the second device may transmit the third information to the first device by using radio resource control (radio resource control, RRC) signalling or a medium access control control element (medium access control control element, MAC CE).

It should be noted that transmission order of the first information, the second information, and the third information is not limited in embodiments of this application.

Generally, a location of the intelligent reflecting surface is a known condition for a network. In this case, as shown in FIG. 6, in a communication link from the access network device (such as a base station) to the intelligent reflecting surface and then to the terminal device, a length $d_1$ of a path between the access network device and the intelligent reflecting surface is known (which may be derived based on location coordinates of the access network device and the intelligent reflecting surface). In addition, a delay $\tau$ may be introduced when the signal is reflected by the intelligent reflecting surface. Then, a distance $d_2$ of a communication link between the intelligent reflecting surface and the terminal device may be derived based on a signal measurement result d of the terminal device (in a downlink) or the access network device (in an uplink), $d_1$, and $\tau$, that is, $d_2 = d - d_1 - T$. Since signal transmission between the terminal and the intelligent reflecting surface may be line-of-sight (as shown in FIG. 6), there is an obstacle on a communication link between the access network device and the terminal device), in the embodiment in S540 below, the terminal device may be located based on $d_2$ (that is, first distance information between the terminal device and the first intelligent reflecting surface may be determined based on the first information).

In S540, the first device determines a positioning result of a terminal device based on the first information.

The positioning result of the terminal device may refer to a location of the terminal device.

In some embodiments, in S540, the first device may determine the first distance information between the terminal device and the first intelligent reflecting surface based on the first information. Further, the first device may determine the positioning result of the terminal device based on the first distance information.

The first device may determine the positioning result of the terminal device based on distances between the terminal device and a plurality of intelligent reflecting surfaces. Optionally, the first device may determine the positioning result of the terminal device based on the first distance information and second distance information. For example, the first device may determine the positioning result of the terminal device based on the first distance information and the second distance information by using the positioning method shown in FIG. 2 or FIG. 3. The second distance information may include N pieces of distance information between the terminal device and N second intelligent reflecting surfaces, where N is an integer greater than or equal to 2.

In some embodiments, the first device may calculate a distance (that is, the first distance information) between the terminal device and the first intelligent reflecting surface based on a measurement result of an SRS (for example, reported by the first access network device), distance information between the first access network device and the first intelligent reflecting surface, and the signal processing delay information of the first intelligent reflecting surface. Optionally, the first device may determine third distance information between the first access network device and the first intelligent reflecting surface based on the location information of the first intelligent reflecting surface. Further, the first device may determine the first distance information based on a first measurement result of an SRS, the third distance information, and the signal processing delay information. Optionally, the first measurement result may be a measurement result of an SRS transmitted by using the first intelligent reflecting surface.

Optionally, the first device may receive the first measurement result transmitted by the first access network device.

In some embodiments, the first device may calculate a distance between the terminal device and the second intelligent reflecting surface based on a measurement result of an SRS (for example, reported by a second access network device), distance information between the second access network device and the second intelligent reflecting surface, and signal processing delay information of the second intelligent reflecting surface. Optionally, the first device may determine fourth distance information between the second access network device and the second intelligent reflecting surface based on location information of the second intelligent reflecting surface. Further, the first device may determine the second distance information based on a second measurement result of an SRS, the fourth distance information, and the signal processing delay information of the second intelligent reflecting surface. Optionally, the second measurement result may be a measurement result of an SRS transmitted by using the second intelligent reflecting surface.

Optionally, the second distance information may include N pieces of distance information. Therefore, in the foregoing embodiment, distance information between the terminal device and each of the N second intelligent reflecting surfaces may be determined, that is, the second distance information is obtained.

Optionally, the first device may receive the second measurement result transmitted by the second access network device. Optionally, the second access network device may include N access network devices, and the N access network devices may perform signal transmission with the terminal device by using the N second intelligent reflecting surfaces, respectively. Optionally, the first device may separately receive N second measurement results transmitted by the N second access network devices.

In some embodiments, the first device may calculate a distance (that is, the first distance information) between the terminal device and the first intelligent reflecting surface based on a measurement result of a DL-PRS (for example, reported by the first access network device), the distance information between the first access network device and the first intelligent reflecting surface, and the signal processing delay information of the first intelligent reflecting surface. Optionally, the first device may determine the third distance information between the first access network device and the first intelligent reflecting surface based on the location information of the first intelligent reflecting surface. Further, the first device may determine the first distance information based on a third measurement result of a DL-PRS, the third distance information, and the signal processing delay information. Optionally, the third measurement result may be a measurement result of a DL-PRS transmitted by using the second intelligent reflecting surface.

Optionally, if the first device is an LMF, the first device may receive the third measurement result transmitted by the terminal device.

Optionally, if the first device is the terminal device, the first device may obtain the third measurement result by measuring the DL-PRS transmitted by using the first intelligent reflecting surface.

In some embodiments, the first device may calculate a distance between the terminal device and the second intelligent reflecting surface based on a measurement result of a DL-PRS (for example, reported by a second access network device), distance information between the second access network device and the second intelligent reflecting surface, and signal processing delay information of the second intelligent reflecting surface. Optionally, the first device may determine fourth distance information between the second access network device and the second intelligent reflecting surface based on location information of the second intelligent reflecting surface. Further, the first device may determine the second distance information based on a fourth measurement result of a DL-PRS, the fourth distance information, and the signal processing delay information of the second intelligent reflecting surface. Optionally, the fourth measurement result may be a measurement result of a DL-PRS transmitted by using the second intelligent reflecting surface.

Optionally, if the first device is an LMF, the first device may receive the fourth measurement result transmitted by the terminal device.

Optionally, if the first device is the terminal device, the first device may obtain the fourth measurement result by measuring the DL-PRS transmitted by using the first intelligent reflecting surface.

Optionally, the fourth measurement result may include N measurement results. For example, the fourth measurement result may include N measurement results of DL-PRSs transmitted by using the N second intelligent reflecting surfaces. Correspondingly, the first device may simultaneously or may not simultaneously receive the N measurement results (the fourth measurement result) transmitted by the terminal device, or the first device may separately measure the N DL-PRSs to obtain the N measurement results (the fourth measurement result).

In embodiments of this application, the first information includes the location information and the signal processing delay information of the first intelligent reflecting surface, and the first device receives the first information, and determines the positioning result of the terminal device based on the first information, thereby facilitating improving positioning precision of the terminal device.

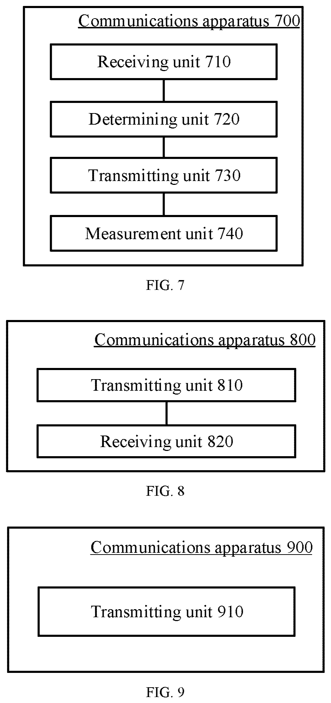

The foregoing describes the method embodiments of this application in detail with reference to FIG. 1 to FIG. 6. The following describes the apparatus embodiments of this application in detail with reference to FIG. 7 to FIG. 10. It should be understood that the description of the method embodiments corresponds to the description of the apparatus embodiments, and therefore, for a part that is not described in detail, reference may be made to the foregoing method embodiments.

FIG. 7 is a schematic structural diagram of a communications apparatus according to an embodiment of this application. As shown in FIG. 7, the apparatus 700 includes a receiving unit 710 and a determining unit 720, specifically as follows.

The receiving unit 710 is configured to receive first information, where the first information includes location information and signal processing delay information of a first intelligent reflecting surface.

The determining unit 720 is configured to determine a positioning result of a terminal device based on the first information.

Optionally, the apparatus 700 further includes a transmitting unit 730, configured to transmit second information, where the second information is used to request the first information.

Optionally, the signal processing delay information includes a real-time delay or a non-real-time delay in signal processing performed by the first intelligent reflecting surface.

Optionally, the first information is carried in new radio NR positioning protocol A signalling.

Optionally, the receiving unit 710 is further configured to receive third information, where the third information is used to indicate that a signal transmitted between a first access network device and the terminal device is processed by the intelligent reflecting surface.

Optionally, the receiving unit 710 is specifically configured to receive the third information by using radio resource control RRC signalling or a medium access control control element MAC CE.

Optionally, the determining unit 720 is specifically configured to: determine first distance information between the terminal device and the first intelligent reflecting surface based on the first information; and determine the positioning result of the terminal device based on the first distance information.

Optionally, the determining unit 720 is specifically configured to determine the positioning result of the terminal device based on the first distance information and second distance information, where the second distance information includes N pieces of distance information between the terminal device and N second intelligent reflecting surfaces, where N is an integer greater than or equal to 2.

Optionally, the determining unit 720 is specifically configured to: determine third distance information between a first access network device and the first intelligent reflecting surface based on the location information of the first intelligent reflecting surface; and determine the first distance information based on a first measurement result of a sounding reference signal SRS, the third distance information, and the signal processing delay information, where the first measurement result is a measurement result of an SRS transmitted by using the first intelligent reflecting surface.

Optionally, the receiving unit 710 is further configured to receive the first measurement result.

Optionally, the determining unit 720 is further configured to: determine fourth distance information between a second access network device and the second intelligent reflecting surface based on location information of the second intelligent reflecting surface; and determine the second distance information based on a second measurement result of a sounding reference signal SRS, the fourth distance information, and signal processing delay information of the second intelligent reflecting surface, where the second measurement result is a measurement result of an SRS transmitted by using the second intelligent reflecting surface.

Optionally, the receiving unit 710 is further configured to receive the second measurement result.

Optionally, the determining unit 720 is specifically configured to: determine third distance information between a first access network device and the first intelligent reflecting surface based on the location information of the first intelligent reflecting surface; and determine the first distance information based on a third measurement result of a downlink positioning reference signal DL-PRS, the third distance information, and the signal processing delay information, where the third measurement result is a measurement result of a DL-PRS transmitted by using the second intelligent reflecting surface.

Optionally, the receiving unit 710 is further configured to receive the third measurement result.

Optionally, the apparatus is a location management function LMF.

Optionally, the apparatus 700 further includes a measurement unit 740, configured to obtain the third measurement result by measuring the DL-PRS transmitted by using the first intelligent reflecting surface.

Optionally, the determining unit 720 is specifically configured to: determine fourth distance information between a second access network device and the second intelligent reflecting surface based on location information of the second intelligent reflecting surface; and determine the second distance information based on a fourth measurement result of a downlink positioning reference signal DL-PRS, the fourth distance information, and signal processing delay information of the second intelligent reflecting surface, where the fourth measurement result is a measurement result of a DL-PRS transmitted by using the second intelligent reflecting surface.

Optionally, the receiving unit 710 is further configured to receive the fourth measurement result.

Optionally, the apparatus 700 further includes a measurement unit 740, configured to obtain the fourth measurement result by measuring the DL-PRS transmitted by using the second intelligent reflecting surface.

Optionally, the apparatus is the terminal device.

Optionally, a communication link between the terminal device and the first intelligent reflecting surface is line-of-sight.

FIG. 8 is a schematic structural diagram of a communications apparatus according to an embodiment of this application. The communications apparatus 800 in FIG. 8 includes a transmitting unit 810, which is specifically as follows.

The transmitting unit 810 is configured to transmit first information, where the first information includes location information and signal processing delay information of a first intelligent reflecting surface.

Optionally, the apparatus 800 further includes a receiving unit 820, configured to receive second information, where the second information is used to request the first information.

Optionally, the signal processing delay information includes a real-time delay or a non-real-time delay in signal processing performed by the first intelligent reflecting surface.

Optionally, the first information is carried in new radio NR positioning protocol A signalling.

Optionally, the apparatus is the first intelligent reflecting surface or a first access network device.

FIG. 9 is a schematic structural diagram of a communications apparatus according to an embodiment of this application. The communications apparatus 900 in FIG. 9 includes a transmitting unit 910, which is specifically as follows.

The transmitting unit 910 is configured to transmit third information, where the third information is used to indicate that a signal transmitted between a first access network device and a terminal device is processed by using an intelligent reflecting surface.

Optionally, the transmitting unit 910 is specifically configured to transmit the third information by using radio resource control RRC signalling or a medium access control control element MAC CE.

Optionally, the apparatus is the terminal device.

Optionally, the apparatus is the first access network device.

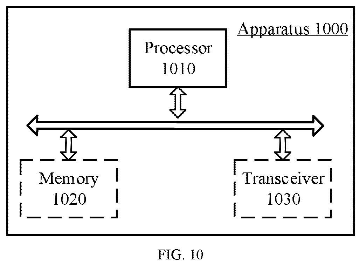

FIG. 10 is a schematic structural diagram of an apparatus according to an embodiment of this application. Dashed lines in FIG. 10 indicate that a unit or module is optional. The apparatus 1000 may be configured to implement the methods described in the foregoing method embodiments. The apparatus 1000 may be a chip or a communications apparatus.

The apparatus 1000 may include one or more processors 1010. The processor 1010 may support the apparatus 1000 in implementing the methods described in the foregoing method embodiments. The processor 1010 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1000 may further include one or more memories 1020. The memory 1020 stores a program that may be executed by the processor 1010 to cause the processor 1010 to perform the methods described in the foregoing method embodiments. The memory 1020 may be separate from the processor 1010 or may be integrated into the processor 1010.

The apparatus 1000 may further include a transceiver 1030. The processor 1010 may communicate with another device or chip through the transceiver 1030. For example, the processor 1010 may transmit data to and receive data from the another device or chip through the transceiver 1030.

An embodiment of this application further provides a computer-readable storage medium, configured to store a program. The computer-readable storage medium may be applied to the communications apparatus provided in embodiments of this application, and the program causes a computer to perform the method executed by the communications apparatus in various embodiments of this application.

An embodiment of this application further provides a computer program product. The computer program product includes a program. The computer program product may be applied to the communications apparatus provided in embodiments of this application, and the program causes a computer to perform the method executed by the communications apparatus in various embodiments of this application.

An embodiment of this application further provides a computer program. The computer program may be applied to the communications apparatus provided in embodiments of this application, and the computer program causes a computer to perform the method executed by the communications apparatus in various embodiments of this application.

It should be understood that, in embodiments of this application, "B that is corresponding to A" means that B is associated with A, and B may be determined based on A. However, it should be further understood that determining B according to A does not mean determining B according to A only, and may further determine B according to A and/or other information.

It should be understood that, in this specification, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

It should be understood that, in embodiments of this application, sequence numbers of the foregoing processes do not mean execution sequences. The execution sequences of the processes should be determined based on functions and internal logic of the processes, and should not be construed as any limitation on the implementation processes of the embodiments of this application.

In the several embodiments provided in this application, it should be understood that the disclosed system, apparatus, and method may be implemented in another manner. For example, the apparatus embodiments described above are merely examples. For example, the unit division is merely logical function division and may be other division in actual implementation. For example, a plurality of units or components may be combined or integrated into another system, or some features may be ignored or not executed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state drive, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:

   receiving, by a first device, first information, wherein the first information comprises location information and signal processing delay information of a first intelligent reflecting surface; and
   determining, by the first device, a positioning result of a terminal device based on the first information.

2. The method according to claim 1, further comprising:
   transmitting, by the first device, second information, wherein the second information is used to request the first information.

3. The method according to claim 1 or 2, wherein the signal processing delay information comprises a real-time delay or a non-real-time delay in signal processing performed by the first intelligent reflecting surface.

4. The method according to any one of claims 1 to 3, wherein the first information is carried in new radio NR positioning protocol A signalling.

5. The method according to any one of claims 1 to 4, further comprising:
   receiving, by the first device, third information, wherein the third information is used to indicate that a signal transmitted between a first access network device and the terminal device is processed by the intelligent reflecting surface.

6. The method according to claim 5, wherein the receiving, by the first device, the third information comprises:
   receiving, by the first device, the third information by using radio resource control RRC signalling or a medium access control control element MAC CE.

7. The method according to any one of claims 1 to 6, wherein the determining, by the first device, the positioning result of the terminal device based on the first information comprises:

   determining, by the first device, first distance information between the terminal device and the first intelligent reflecting surface based on the first information; and
   determining, by the first device, the positioning result of the terminal device based on the first distance information.

8. The method according to claim 7, wherein the determining, by the first device, the positioning result of the terminal device based on the first distance information comprises:
   determining, by the first device, the positioning result of the terminal device based on the first distance information and second distance information, wherein the second distance information comprises N pieces of distance information between the terminal device and N second intelligent reflecting surfaces, wherein N is an integer greater than or equal to 2.

9. The method according to claim 7 or 8, wherein the determining, by the first device, the first distance information between the terminal device and the first intelligent reflecting surface based on the first information comprises:

   determining, by the first device, third distance information between a first access network device and the first intelligent reflecting surface based on the location information of the first intelligent reflecting surface; and
   determining, by the first device, the first distance information based on a first measurement result of a sounding reference signal SRS, the third distance information, and the signal processing delay information, wherein the first measurement result is a measurement result of an SRS transmitted by using the first intelligent reflecting surface.

10. The method according to claim 9, further comprising:
    receiving, by the first device, the first measurement result.

11. The method according to claim 8, further comprising:

determining, by the first device, fourth distance information between a second access network device and the second intelligent reflecting surface based on location information of the second intelligent reflecting surface; and

determining, by the first device, the second distance information based on a second measurement result of a sounding reference signal SRS, the fourth distance information, and signal processing delay information of the second intelligent reflecting surface, wherein the second measurement result is a measurement result of an SRS transmitted by using the second intelligent reflecting surface.

12. The method according to claim 11, further comprising:

receiving, by the first device, the second measurement result.

13. The method according to claim 7 or 8, wherein the determining, by the first device, the first distance information between the terminal device and the first intelligent reflecting surface based on the first information comprises:

determining, by the first device, third distance information between a first access network device and the first intelligent reflecting surface based on the location information of the first intelligent reflecting surface; and

determining, by the first device, the first distance information based on a third measurement result of a downlink positioning reference signal DL-PRS, the third distance information, and the signal processing delay information, wherein the third measurement result is a measurement result of a DL-PRS transmitted by using the second intelligent reflecting surface.

14. The method according to claim 13, further comprising:

receiving, by the first device, the third measurement result.

15. The method according to any one of claims 1 to 14, wherein the first device is a location management function LMF.

16. The method according to claim 13, further comprising:

obtaining, by the first device, the third measurement result by measuring the DL-PRS transmitted by using the first intelligent reflecting surface.

17. The method according to claim 8, further comprising:

determining, by the first device, fourth distance information between a second access network device and the second intelligent reflecting surface based on location information of the second intelligent reflecting surface; and

determining, by the first device, the second distance information based on a fourth measurement result of a downlink positioning reference signal DL-PRS, the fourth distance information, and signal processing delay information of the second intelligent reflecting surface, wherein the fourth measurement result is a measurement result of a DL-PRS transmitted by using the second intelligent reflecting surface.

18. The method according to claim 17, further comprising:

receiving, by the first device, the fourth measurement result.

19. The method according to claim 17, further comprising:

obtaining, by the first device, the fourth measurement result by measuring the DL-PRS transmitted by using the second intelligent reflecting surface.

20. The method according to any one of claims 1 to 8, 13, 16, 17, or 19, wherein the first device is the terminal device.

21. The method according to any one of claims 1 to 20, wherein a communication link between the terminal device and the first intelligent reflecting surface is line-of-sight.

22. A communication method, comprising:
transmitting, by a second device, first information, wherein the first information comprises location information and signal processing delay information of a first intelligent reflecting surface.

23. The method according to claim 1, further comprising:
receiving, by the second device, second information, wherein the second information is used to request the first information.

24. The method according to claim 1 or 2, wherein the signal processing delay information comprises a real-time delay or a non-real-time delay in signal processing performed by the first intelligent reflecting surface.

25. The method according to any one of claims 1 to 3, wherein the first information is carried in new radio NR positioning protocol A signalling.

26. The method according to any one of claims 1 to 4, wherein the second device is the first intelligent reflecting surface or a first access network device.

27. A communication method, comprising:
transmitting, by a third device, third information, wherein the third information is used to indicate that a signal transmitted between a first access network device and a terminal device is processed by using an intelligent reflecting surface.

28. The method according to claim 1, wherein the transmitting, by the third device, the third information comprises:
transmitting, by the third device, the third information by using radio resource control RRC signalling or a medium access control control element MAC CE.

29. The method according to claim 1 or 2, wherein the third device is the terminal device.

30. The method according to claim 1, wherein the third device is the first access network device.

31. A communications apparatus, comprising:

a receiving unit, configured to receive first information, wherein the first information comprises location information and signal processing delay information of a first intelligent reflecting surface; and
a determining unit, configured to determine a positioning result of a terminal device based on the first information.

32. The apparatus according to claim 31, wherein the apparatus further comprises a transmitting unit, configured to transmit second information, wherein the second information is used to request the first information.

33. The apparatus according to claim 31 or 32, wherein the signal processing delay information comprises a real-time delay or a non-real-time delay in signal processing performed by the first intelligent reflecting surface.

34. The apparatus according to any one of claims 31 to 33, wherein the first information is carried in new radio NR positioning protocol A signalling.

35. The apparatus according to any one of claims 31 to 34, wherein the receiving unit is further configured to receive third information, wherein the third information is used to indicate that a signal transmitted between a first access network device and a terminal device is processed by using an intelligent reflecting surface.

36. The apparatus according to claim 35, wherein the receiving unit is specifically configured to receive the third information by using radio resource control RRC signalling or a medium access control control element MAC CE.

37. The apparatus according to any one of claims 31 to 36, wherein the determining unit is specifically configured to determine first distance information between the terminal device and the first intelligent reflecting surface based on the first information; and determine the positioning result of the terminal device based on the first distance information.

38. The apparatus according to claim 37, wherein the determining unit is specifically configured to determine the positioning result of the terminal device based on the first distance information and second distance information, wherein the second distance information comprises N pieces of distance information between the terminal device and N second intelligent reflecting surfaces, wherein N is an integer greater than or equal to 2.

39. The apparatus according to claim 37 or 38, wherein the determining unit is specifically configured to: determine third distance information between a first access network device and the first intelligent reflecting surface based on the location information of the first intelligent reflecting surface; and determine the first distance information based on a first measurement result of a sounding reference signal SRS, the third distance information, and the signal processing delay information, wherein the first measurement result is a measurement result of an SRS transmitted by using the first intelligent reflecting surface.

40. The apparatus according to claim 39, wherein the receiving unit is further configured to receive the first measurement result.

41. The apparatus according to claim 38, wherein the determining unit is further configured to: determine fourth distance information between a second access network device and the second intelligent reflecting surface based on location information of the second intelligent reflecting surface; and determine the second distance information based on a second measurement result of a sounding reference signal SRS, the fourth distance information, and signal processing delay information of the second intelligent reflecting surface, wherein the second measurement result is a measurement result of an SRS transmitted by using the second intelligent reflecting surface.

42. The apparatus according to claim 41, wherein the receiving unit is further configured to receive the second measurement result.

43. The apparatus according to claim 37 or 38, wherein the determining unit is specifically configured to: determine third distance information between a first access network device and the first intelligent reflecting surface based on the location information of the first intelligent reflecting surface; and determine the first distance information based on a third measurement result of a downlink positioning reference signal DL-PRS, the third distance information, and the signal processing delay information, wherein the third measurement result is a measurement result of a DL-PRS transmitted by using the second intelligent reflecting surface.

44. The apparatus according to claim 43, wherein the receiving unit is further configured to receive the third measurement result.

45. The apparatus according to any one of claims 31 to 44, wherein the apparatus is a location management function LMF.

46. The apparatus according to claim 43, wherein the apparatus further comprises a measurement unit, configured to obtain the third measurement result by measuring the DL-PRS transmitted by using the first intelligent reflecting surface.

47. The apparatus according to claim 38, wherein the determining unit is specifically configured to: determine fourth distance information between a second access network device and the second intelligent reflecting surface based on location information of the second intelligent reflecting surface; and determine the second distance information based on a fourth measurement result of a downlink positioning reference signal DL-PRS, the fourth distance information, and signal processing delay information of the second intelligent reflecting surface, wherein the fourth measurement result is a measurement result of a DL-PRS transmitted by using the second intelligent reflecting surface.

48. The apparatus according to claim 47, wherein the receiving unit is further configured to receive the fourth measurement result.

49. The apparatus according to claim 47, wherein the apparatus further comprises a measurement unit, configured to obtain the fourth measurement result by measuring the DL-PRS transmitted by using the second intelligent reflecting surface.

50. The apparatus according to any one of claims 31 to 38, 43, 46, 47, or 49, wherein the apparatus is the terminal device.

51. The apparatus according to any one of claims 31 to 50, wherein a communication link between the terminal device and the first intelligent reflecting surface is line-of-sight.

52. A communications apparatus, comprising:
a transmitting unit, configured to transmit first information, wherein the first information comprises location information and signal processing delay information of a first intelligent reflecting surface.

53. The apparatus according to claim 52, wherein the apparatus further comprises a receiving unit, configured to receive second information, wherein the second information is used to request the first information.

54. The apparatus according to claim 52 or 53, wherein the signal processing delay information comprises a real-time delay or a non-real-time delay in signal processing performed by the first intelligent reflecting surface.

55. The apparatus according to any one of claims 52 to 54, wherein the first information is carried in new radio NR positioning protocol A signalling.

56. The apparatus according to any one of claims 52 to 55, wherein the apparatus is the first intelligent reflecting surface or a first access network device.

57. A communications apparatus, comprising:
a transmitting unit, configured to transmit third information, wherein the third information is used to indicate that a signal transmitted between a first access network device and a terminal device is processed by using an intelligent reflecting surface.

58. The apparatus according to claim 57, wherein the transmitting unit is specifically configured to transmit the third information by using radio resource control RRC signalling or a medium access control control element MAC CE.

59. The apparatus according to claim 57 or 58, wherein the apparatus is the terminal device.

60. The apparatus according to claim 57, wherein the apparatus is the first access network device.

61. A communications apparatus, comprising a memory, a transceiver, and a processor, wherein the memory is configured to store a program, the processor is configured to perform data transmission and reception by using the transceiver, and the processor is configured to invoke the program in the memory to cause the communications apparatus to execute the method according to any one of claims 1 to 21.

**62.** A communications apparatus, comprising a memory, a transceiver, and a processor, wherein the memory is configured to store a program, the processor is configured to perform data transmission and reception by using the transceiver, and the processor is configured to invoke the program in the memory to cause the communications apparatus to execute the method according to any one of claims 22 to 26.

**63.** A communications apparatus, comprising a memory, a transceiver, and a processor, wherein the memory is configured to store a program, the processor is configured to perform data transmission and reception by using the transceiver, and the processor is configured to invoke the program in the memory to cause the communications apparatus to execute the method according to any one of claims 27 to 30.

**64.** A chip, comprising a processor, configured to invoke a program from a memory to cause a device installed with the chip to execute the method according to any one of claims 1 to 21.

**65.** A chip, comprising a processor, configured to invoke a program from a memory to cause a device installed with the chip to execute the method according to any one of claims 22 to 26.

**66.** A chip, comprising a processor, configured to invoke a program from a memory to cause a device installed with the chip to execute the method according to any one of claims 27 to 30.

**67.** A computer-readable storage medium, wherein the computer-readable storage medium stores a program, and the program causes a computer to execute the method according to any one of claims 1 to 21.

**68.** A computer-readable storage medium, wherein the computer-readable storage medium stores a program, and the program causes a computer to execute the method according to any one of claims 22 to 26.

**69.** A computer-readable storage medium, wherein the computer-readable storage medium stores a program, and the program causes a computer to execute the method according to any one of claims 27 to 30.

**70.** A computer program product, comprising a program, wherein the program causes a computer to execute the method according to any one of claims 1 to 21.

**71.** A computer program product, comprising a program, wherein the program causes a computer to execute the method according to any one of claims 22 to 26.

**72.** A computer program product, comprising a program, wherein the program causes a computer to execute the method according to any one of claims 27 to 30.

**73.** A computer program, wherein the computer program causes a computer to execute the method according to any one of claims 1 to 21.

**74.** A computer program, wherein the computer program causes a computer to execute the method according to any one of claims 22 to 26.

**75.** A computer program, wherein the computer program causes a computer to execute the method according to any one of claims 27 to 30.

100

120                    110                              120

FIG. 1

S4

TRP 4

d4                                        d1        TRP 1

S3

S1

d3              d2

S2

TRP 3                              TRP 2

FIG. 2

$T_{UE}$

UE

SRS                    DL-PRS

RAN

$T_{RAN}$

FIG. 3

RIS

RAN

UE

FIG. 4

Method 500

| Third device | First device | Second device |
|---|---|---|

S530: Third information

S520: Second information

S510: First information

S540: Determine a positioning result of a terminal device based on the first information

FIG. 5

d1

d2

Access network device

Obstacle

Terminal device

FIG. 6

Communications apparatus 700

Receiving unit 710

Determining unit 720

Transmitting unit 730

Measurement unit 740

FIG. 7

Communications apparatus 800

Transmitting unit 810

Receiving unit 820

FIG. 8

Communications apparatus 900

Transmitting unit 910

FIG. 9

FIG. 10

## INTERNATIONAL SEARCH REPORT

| International application No. |
|---|
| **PCT/CN2023/075955** |

**A.    CLASSIFICATION OF SUBJECT MATTER**

H04W 64/00(2009.01)i

According to International Patent Classification (IPC) or to both national classification and IPC

**B.    FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, WPABSC, ENTXTC, ENTXT, VCN, VEN, CJFD, 3GPP: LCS/位置服务, 反射/IRS, 定位管理功能/LMF, 延迟/延时/时延/时差, 定位/位置, reflect, delay/latency/time, location/position

**C.    DOCUMENTS CONSIDERED TO BE RELEVANT**

| Category* | Citation of document, with indication, where appropriate, of the relevant passages | Relevant to claim No. |
|---|---|---|
| X | CN 115567866 A (HUAWEI TECHNOLOGIES CO., LTD.) 03 January 2023 (2023-01-03) description, paragraphs 2-97 | 1-75 |
| A | WO 2022261576 A1 (QUALCOMM INCORPORATED) 15 December 2022 (2022-12-15) entire document | 1-75 |
| A | WO 2022197369 A2 (QUALCOMM INCORPORATED) 22 September 2022 (2022-09-22) entire document | 1-75 |
| A | WO 2022051882 A1 (ZTE CORP.) 17 March 2022 (2022-03-17) entire document | 1-75 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 August 2023** | **04 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/075955**

| Patent document cited in search report | | | Publication date (day/month/year) | Patent family member(s) | | | Publication date (day/month/year) |
|---|---|---|---|---|---|---|---|
| CN | 115567866 | A | 03 January 2023 | None | | | |
| WO | 2022261576 | A1 | 15 December 2022 | TW | 202249514 | A | 16 December 2022 |
| WO | 2022197369 | A2 | 22 September 2022 | TW | 202239248 | A | 01 October 2022 |
| | | | | WO | 2022197369 | A3 | 27 October 2022 |
| | | | | WO | 2022197369 | A4 | 01 December 2022 |
| WO | 2022051882 | A1 | 17 March 2022 | EP | 4179360 | A1 | 17 May 2023 |

Form PCT/ISA/210 (patent family annex) (July 2022)